# EUROPEAN PATENT APPLICATION

(11) **EP 3 890 267 A1**
(43) Date of publication of application: **06.10.2021**
(21) Application number: 21161928.3
(22) Date of filing: 11.03.2021
(51) Int. Cl.: H04L 29/06, H04L 12/741, H04L 12/823, H04L 12/705, H04L 12/703

(54) **DESTINATION SPECIFIC EGRESS LINK UNAVAILABILITY IN INTEGRATED ACCESS AND BACKHAUL (IAB)**

(30) Priority: 30.03.2020 US 202063001803 P
(71) Applicant: Nokia Solutions and Networks Oy, 02610 Espoo (FI)
(72) Inventor: Koskinen, Henri Markus, 02600 Espoo (FI)
(74) Representative: Nokia EPO representatives

(57) **Abstract**

Systems, methods, apparatuses, and computer program products for packet backtracking and/or rerouting by integrated access and backhaul (IAB) nodes are provided. One method may include receiving, at a network node, a packet over an ingress link. The method may also include determining whether the packet is being returned as undeliverable, and, when it is determined that the packet is being returned as undeliverable, re-routing, discarding or sending the packet over a return egress link.

## Description

### FIELD:

Some example embodiments may generally relate to mobile or wireless telecommunication systems, such as Long Term Evolution (LTE) or fifth generation (5G) radio access technology or new radio (NR) access technology, or other communications systems. For example, certain embodiments may relate to systems and/or methods for packet backtracking and/or rerouting by integrated access and backhaul (IAB) nodes.

### BACKGROUND:

Examples of mobile or wireless telecommunication systems may include the Universal Mobile Telecommunications System (UMTS) Terrestrial Radio Access Network (UTRAN), Long Term Evolution (LTE) Evolved UTRAN (E-UTRAN), LTE-Advanced (LTE-A), MulteFire, LTE-A Pro, and/or fifth generation (5G) radio access technology or new radio (NR) access technology. 5G wireless systems refer to the next generation (NG) of radio systems and network architecture. A 5G system is mostly built on a 5G new radio (NR), but a 5G (or NG) network can also build on the E-UTRA radio. It is estimated that NR provides bitrates on the order of 10-20 Gbit/s or higher, and can support at least service categories such as enhanced mobile broadband (eMBB) and ultra-reliable low-latency-communication (URLLC) as well as massive machine type communication (mMTC). NR is expected to deliver extreme broadband and ultra-robust, low latency connectivity and massive networking to support the Internet of Things (IoT). With IoT and machine-to-machine (M2M) communication becoming more widespread, there will be a growing need for networks that meet the needs of lower power, low data rate, and long battery life. The next generation radio access network (NG-RAN) represents the RAN for 5G, which can provide both NR and LTE (and LTE-Advanced) radio accesses. It is noted that, in 5G, the nodes that can provide radio access functionality to a user equipment (i.e., similar to the Node B, NB, in UTRAN or the evolved NB, eNB, in LTE) may be named next-generation NB (gNB) when built on NR radio and may be named next-generation eNB (NG-eNB) when built on E-UTRA radio.

### BRIEF DESCRIPTION OF THE DRAWINGS:

For proper understanding of example embodiments, reference should be made to the accompanying drawings, wherein:
Fig. 1 illustrates an example network including a plurality of IAB nodes, according to one example embodiment;
Fig. 2 illustrates an example format of a BAP data PDU, according to an embodiment;
Fig. 3a illustrates an example flow diagram of a method, according to an embodiment;
Fig. 3b illustrates an example flow diagram of a method, according to an embodiment;
Fig. 3c illustrates an example flow diagram of a method, according to an embodiment;
Fig. 4a illustrates an example block diagram of an apparatus, according to an embodiment; and
Fig. 4b illustrates an example block diagram of an apparatus, according to an embodiment.

### SUMMARY

According some aspects, there is provided the subject matter of the independent claims. Some further aspects are defined in the dependent claims. The embodiments that do not fall under the scope of the claims are to be interpreted as examples useful for understanding the disclosure.

### DETAILED DESCRIPTION:

It will be readily understood that the components of certain example embodiments, as generally described and illustrated in the figures herein, may be arranged and designed in a wide variety of different configurations. Thus, the following detailed description of some example embodiments of systems, methods, apparatuses, and computer program products for packet backtracking and/or rerouting by integrated access and backhaul (IAB) nodes and/or IAB donor distributed units (DUs), is not intended to limit the scope of certain embodiments but is representative of selected example embodiments.

The features, structures, or characteristics of example embodiments described throughout this specification may be combined in any suitable manner in one or more example embodiments. For example, the usage of the phrases "certain embodiments," "some embodiments," or other similar language, throughout this specification refers to the fact that a particular feature, structure, or characteristic described in connection with an embodiment may be included in at least one embodiment. Thus, appearances of the phrases "in certain embodiments," "in some embodiments," "in other embodiments," or other similar language, throughout this specification do not necessarily all refer to the same group of embodiments, and the described features, structures, or characteristics may be combined in any suitable manner in one or more example embodiments.

Additionally, if desired, the different functions or procedures discussed below may be performed in a different order and/or concurrently with each other. Furthermore, if desired, one or more of the described functions or procedures may be optional or may be combined. As such, the following description should be considered as illustrative of the principles and teachings of certain example embodiments, and not in limitation thereof.

Certain embodiments described herein can improve routing in Integrated Access and Backhaul (IAB). In IAB deployments, the traffic from IAB nodes is wirelessly backhauled between IAB node and IAB donor, or another IAB node, using an established backhaul (BH) network topology. IAB introduces Backhaul Adaptation Protocol (BAP) in layer immediately above radio link control (RLC), on backhaul radio links serving IAB nodes for the purpose of connecting towards the fixed network. BAP is responsible, for example, for routing packets towards their destinations as defined by the Routing ID (comprised of Destination and Path parts) that is part of the BAP-protocol data unit (PDU) header.

3^{rd} generation partnership project (3GPP) Release-17 work item has agreed on the specification of enhancements to reduce service interruption due to IAB-node migration and backhaul (BH) radio link failure (RLF) recovery, and the specification of enhancements to topological redundancy including support of control plane (CP)/user plane (UP) separation. It is noted that BH RLF refers to RLF on a radio link over which an IAB node connects towards the fixed network. Topological redundancy refers to multiple BAP-layer routes being available between an IAB node and its donor-gNB centralized unit (CU).

In the present state of IAB it is assumed that, if there is a packet with a path ID with no matching entry in the routing table configured at an IAB node, routing is done based on destination address. Additionally, packet re-routing when there is a matching path ID in the routing table is only supported in egress-link-not-available (RLF) scenario.

3GPP technical specification (TS) 38.340 includes a BAP specification. As specified in section 5.2.1.2 of 3GPP TS 38.340, the BAP sublayer can perform routing based on the BH Routing Configuration received via an F1AP BH ROUTING CONFIGURATION message as specified in 3GPP TS 38.473. The entries of the BH Routing Configuration contains a BAP Routing ID that includes a BAP address and a BAP path identity, and a Next Hop BAP Address.

For a BAP Data PDU to be transmitted, if the transmission is in the upstream direction and there is no BH Routing Configuration configured during IAB-node integration phase, then any egress link may be selected. If there is an entry in the BH Routing Configuration having a BAP address that is the same as the DESTINATION field, having a path identity that is the same as the PATH field, and having egress link corresponding to the *Next Hop BAP Address* available, then the egress link corresponding to the *Next Hop BAP Address* of the entry can be selected. Otherwise, if there is at least one entry in the BH Routing Configuration having *BAP address* that is the same as the DESTINATION field, and having egress link corresponding to the *Next Hop BAP Address* available, then an entry from the BH Routing Configuration with *BAP address* that is the same as the DESTINATION field and having egress link corresponding to the *Next Hop BAP Address* available can be selected, and the egress link corresponding to the *Next Hop BAP Address* of the entry selected above can be selected.

It is noted that an egress link is not considered to be available if the link is in RLF. For each combination of a BAP address and BAP path ID, there can be at most one entry in the BH routing configuration. It should be further noted that the exact names of the fields discussed herein is yet to be determined. In addition, it remains to be seen how a case will be handled where the selected entry is encountering BH RLF or no entry is available.

In other words, it is currently undecided as to what to do with a BAP Data PDU for which no egress link toward the packet's destination (according to the routing configuration of the IAB node performing this procedure) is available. Currently, there seem to be two alternatives: (1) the BAP PDU is discarded; or (2) the BAP PDU is returned as undeliverable to a previous node on the path toward the destination (applicable only to PDUs received from another node, as opposed to PDUs constructed by this IAB node from an SDU received from higher protocol layers of the IAB node).

The alternative (2) of returning the BAP PDU as undeliverable to a previous node has the benefit of allowing further re-routing attempts by previous BAP-forwarding hops, which may well result in successful delivery of the packet. In particular, in the presence of a BH RLF, it can result in faster delivery of the packet compared to the current baseline operation.

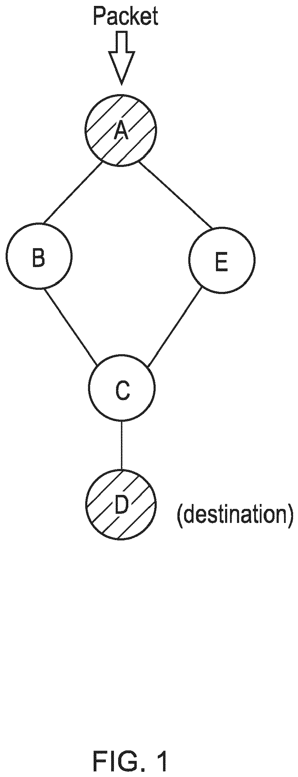

However, despite the advantages from alternative (2) above, simply applying that alternative into the current BAP procedures may create problems. For instance, assuming the example network of Fig. 1, IAB node A receives a packet destined to node D, with path ID in the packet header indicating a path via node B, and forwards the packet to node B accordingly. In the example of Fig. 1, node A can be few or many hops away from the IAB donor gNB. Node B can have links and routes to other nodes not shown, but no other route to D.

Now, when node B returns the packet to node A as undeliverable (link B-C is broken), if node A simply follows the BAP specification in its current form, then node A will read the BAP header of this received packet and, because link A-B is available, it will send it to node B again. As a result, the packet ends up in a routing loop between node A and node B.

Even if node A is smart enough not to return the packet to the node who just returned it, and, e.g., sends it to node E instead, then node E may return the packet as undeliverable (i.e., also link E-C broken). Again, node A may send the packet to node B, resulting in a routing loop. Or, node A may itself return the packet as undeliverable to its source at the top of Fig. 1 - but just like node B and node E, it may not know if that is worthwhile, i.e., whether any previous-hop node has any alternative paths to D.

Further, even if a packet is successfully re-routed over E-C-D, following packets whose headers indicate the same destination and path via node B may first take the wasteful de-tour via node B.

Certain embodiments provide systems and methods to enable the successful introduction of packet backtracking-and-rerouting by IAB nodes and/or IAB donor DUs. In one embodiment, an implicit undeliverable-indication may be provided, for example such that, if the ingress link over which a node receives a packet matches with a "next hop" in the node's routing configuration toward the destination indicated in the packet's header, the node may interpret that the packet is being returned as undeliverable.

Some embodiments may also provide for packet-return configurability. For example, whether an IAB node is to return an undeliverable packet to a previous node on a path toward the destination (as opposed to discarding the packet) is configured to the IAB node. The configuration can be done by the donor gNB of the IAB node, based, for example, on whether alternative routes may be available for the returned packet. Also, in some embodiments, the configuration may be configured to the IAB node with granularity of: packet destination; and/or BH RLC channel, or QoS attribute(s) of BH RLC channels. For instance, backtracking packets looking for an alternative route may not be desirable for mass quantities of user-plane traffic, but may be desirable for urgent control-plane traffic. Alternatively, or additionally, the granularity may be fixed in specifications (e.g., applicable to control-plane traffic but not to user-plane traffic).

Further, certain embodiments may provide a configuration of "return next hop" as a BAP-routing attribute. This can be configured, for example, per BAP routing ID (destination + path), and may be used in determining the link over which to return an undeliverable packet, as discussed below.

According to an embodiment, when an IAB node (possibly explicitly configured to return packets) determines that a packet is undeliverable (i.e., the destination indicated in the packet header is not reachable via any egress link), the IAB node may check whether its routing configuration contains a routing ID (destination + path) matching that indicated in the packet's header. If the routing configuration does contain a match with what is indicated in the packet's header, the IAB node may return the packet to the node indicated by "return next hop" configured for that routing ID. In the example of Fig. 1, this would apply to node B returning the packet. This may ensure that packets undeliverable on their designated path are returned along that path and so preceding nodes on that path learn about it and can better handle possible subsequent packets. If the routing configuration does not contain a match with what is indicated in the packet's header (e.g., this would apply to node E in the example of Fig. 1), then, from its routing configuration, the IAB node may select a routing ID with the destination matching that indicated in the packet header (such routing ID is assumed to exist because the packet was re-routed to this node in the first place) and may return the packet to the node indicated by "return next hop" configured for that selected routing ID.

According to an embodiment, when an IAB node receives a packet that indicates (explicitly or implicitly) undeliverable, the IAB node may consider the destination indicated in the packet header unreachable via the link over which the packet was received (even if the link itself has not failed). Such link-specific unreachability may be taken into account in future routing decisions, including when a new packet is being routed. In one possible embodiment, if the received packet explicitly indicated itself as undeliverable, the IAB node may remove this indication from the packet (to avoid undeliverable-indications on unintended links, such as A-E in the example above). In an embodiment, the IAB node may then re-route the packet over another link via which the packet's destination is reachable. If no such other link is available, the IAB node may consider the packet undeliverable and act accordingly. For instance, the IAB node may discard the packet or return it with a proper indication as undeliverable, depending on possible configuration.

Further, an embodiment may provide a mechanism to ensure that, once an IAB node or an IAB donor DU considers a given destination unreachable via a link, it does not necessarily consider it unreachable permanently. For that purpose, according to certain embodiments, when a node considers a given destination unreachable via a link, it may start a timer associated with the pair (link, destination). When the timer associated with a pair (link, destination) expires, the node no longer considers the destination unreachable via the link. The timer associated with a pair (link, destination) may be re-started upon reception, over that link, of further packets undeliverable to that destination. Additionally or alternatively, in some embodiments, a node no longer considers a given destination unreachable via a given link (and stops the above-defined timer associated with that pair (link, destination), if in place and running) upon reception of an indication. For example, such an indication may include: when the node receives, over that link, BAP-protocol flow-control feedback inviting further data destined to that destination; and/or when the node receives a backhaul routing configuration message configuring that link as a next hop toward that destination.

In view of certain embodiments discussed above, the BAP specification may be modified as discussed in the following. As mentioned above, the BAP sublayer can perform routing based on the BH Routing Configuration received via an F1AP BH ROUTING CONFIGURATION message as specified in 3GPP TS 38.473. The entries of the BH Routing Configuration may contain a BAP Routing ID that includes a BAP address and a BAP path identity, optionally a Return Next Hop BAP address, and a Next Hop BAP Address.

For a BAP Data PDU to be transmitted, if the transmission is in the upstream direction and there is no BH Routing Configuration configured during IAB-node integration phase, then any egress link may be selected. If there is an entry in the BH Routing Configuration having a BAP address that is the same as the DESTINATION field, having a path identity that is the same as the PATH field, and having egress link corresponding to the *Next Hop BAP Address* available and not considered unavailable towards the BAP address in the DESTINATION field, then the egress link corresponding to the *Next Hop BAP Address* of the entry can be selected. Otherwise, if there is at least one entry in the BH Routing Configuration having *BAP address* that is the same as the DESTINATION field, and having egress link corresponding to the *Next Hop BAP Address* available and not considered unavailable towards the BAP address in the DESTINATION field, then an entry from the BH Routing Configuration with *BAP address* that is the same as the DESTINATION field and having egress link corresponding to the *Next Hop BAP Address* available and not considered unavailable towards the BAP address in the DESTINATION field can be selected, and the egress link corresponding to the *Next Hop BAP Address* of the entry selected above can be selected.

According to an embodiment, if there is an entry in the BH Routing Configuration whose *BAP address* is the same as the DESTINATION field, whose path identity is the same as the PATH field, and for which an egress link corresponding to *Return Next Hop BAP Address* is configured and available, then the IAB node may select the egress link corresponding to *Return Next Hop BAP Address* of the entry and may set the header of this BAP PDU to indicate "Undeliverable". If there is at least one entry in the BH Routing Configuration whose *BAP address* is the same as the DESTINATION field and for which an egress link corresponding to *Return Next Hop BAP Address* is configured and available, then the IAB node may select one such egress link and may set the header of this BAP PDU to indicate "Undeliverable".

According to certain embodiments, upon receiving a BAP Data PDU from an ingress RLC channel on an ingress link, the receiving part of the BAP sublayer may, if DESTINATION field of this BAP PDU is same as the BAP address of this node, remove the BAP header of this BAP PDU and deliver the BAP SDU to upper layers. Otherwise, if the header of this BAP PDU indicates "Undeliverable", the receiving part of the BAP sublayer may consider the ingress link to be unavailable towards the BAP address in the DESTINATION field, may start a timer (NEW_TIMER) associated with the BAP address in the DESTINATION field and the ingress link, and/or may set the header of this BAP PDU to no longer indicate "Undeliverable". The receiving part of the BAP sublayer may then deliver the packet to the transmitting part of the BAP sublayer on the same node.

In some embodiments, when the timer (NEW_TIMER) associated with a link and a BAP address expires, the BAP sublayer may cease to consider the link to be unavailable towards the BAP address. It is noted that, independent of this, the link may be generally unavailable due to RLF.

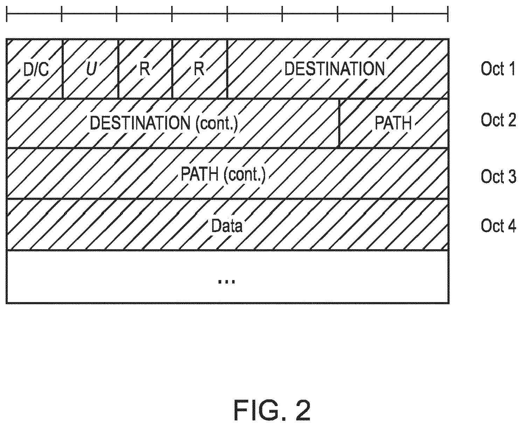

Fig. 2 illustrates an example format of a BAP data PDU, according to an embodiment. As illustrated in the example of Fig. 2, field U may have a length of one bit and may indicate if the corresponding BAP data PDU has been undeliverable. For instance, if the U field is set to 0, then the BAP data PDU is not indicated as undeliverable. And, if the U field is set to 1, then the BAP data PDU is indicated as undeliverable. It is noted that Fig. 2 is just one example, and other examples are possible according to further embodiments.

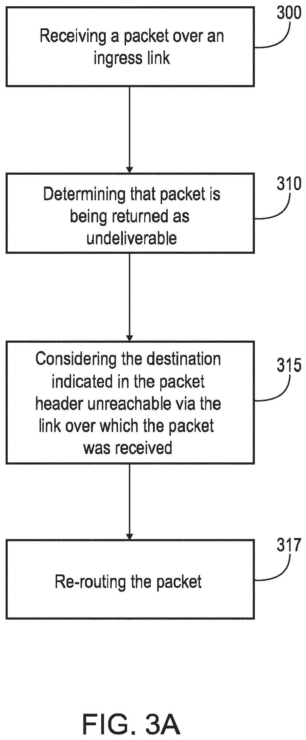

Fig. 3a illustrates an example flow diagram of a method for rerouting and/or backtracking packets, according to one example embodiment. In an example embodiment, the flow diagram of Fig. 3a may be performed by a network entity or network node associated with a communication system, such as LTE or 5G NR. For instance, in some example embodiments, the network node performing the method of Fig. 3a may include a base station, eNB, gNB, NG-RAN node, and/or IAB node (CU and/or DU part). In one example embodiment, the method of Fig. 3a may be performed by an IAB node, such as those illustrated in Fig. 1.

As illustrated in the example of Fig. 3a, the method may include, at 300, receiving a packet over an ingress link. In an embodiment, the method may include, at 310, determining that the packet is being returned as undeliverable. For example, the determining 310 may include determining that the packet is being returned as undeliverable when the ingress link over which a packet is received (at the IAB node) matches with a next hop, in the IAB node's routing configuration, toward the destination indicated in a header of the packet.

According to an embodiment, the IAB node may be configured with a configuration as to whether to return an undeliverable packet to a previous node on a path toward the destination (as opposed to discarding the packet). In some embodiments, the IAB node may be configured by the donor gNB of the IAB node based, for example, at least on whether alternative routes may be available for the undeliverable packet. Also, in some embodiments, the configuration may be configured to the IAB node with granularity of packet destination, and/or BH RLC channel or QoS attribute(s) of BH RLC channels. For instance, backtracking packets looking for an alternative route may not be desirable for mass quantities of user-plane traffic, but may be desirable for urgent control-plane traffic. Alternatively, or additionally, the granularity may be fixed in specifications (e.g., applicable to control-plane traffic but not to user-plane traffic).

In certain embodiments, the IAB node may be configured with a return next hop configuration per BAP routing ID (destination + path). According to an embodiment, the return next hop configuration may be used by the IAB node for determining the link over which to return an undeliverable packet.

According to certain embodiments, the method of Fig. 3a may include, at 315, when a packet is received that is indicated (explicitly or implicitly) as undeliverable, considering or determining the destination indicated in the packet header unreachable via the link over which the packet was received (even if the link itself has not failed). Such link-specific unreachability may be taken into account in future routing decisions, including when a new packet is being routed. In one possible embodiment, if the received packet is explicitly indicated in the packet as undeliverable, the method may include removing this indication from the packet (to avoid undeliverable-indications on unintended links). In one embodiment, the method may then include, at 317, re-routing the packet over another link via which the packet's destination is reachable. If no such other link is available, the method may include determining that the packet is undeliverable and act accordingly, such as discarding the packet or returning it as undeliverable, depending on possible configuration.

Further, in an embodiment a destination that is determined unreachable via a given link, is not necessarily considered unreachable via the link permanently. For example, according to certain embodiments, when an IAB node or an IAB donor DU considers a destination unreachable via a given link, the method may include starting a timer associated with the pair (link, destination). When the timer associated with the pair (link, destination) expires, the method may include determining the destination reachable via the link again. In an embodiment, the method may include re-starting the timer associated with the pair (link, destination) upon reception, over that link, of further packets undeliverable to that destination. Additionally or alternatively, in some embodiments, the method may include, upon reception of an indication, considering a given destination reachable via a given link, and stopping the above-defined timer associated with that pair if the timer is in place and running. For example, the indication may include: when the node receives, over that link, BAP-protocol flow-control feedback inviting further data destined to that destination; and/or when the node receives a backhaul routing configuration message configuring that link as a next hop toward that destination.

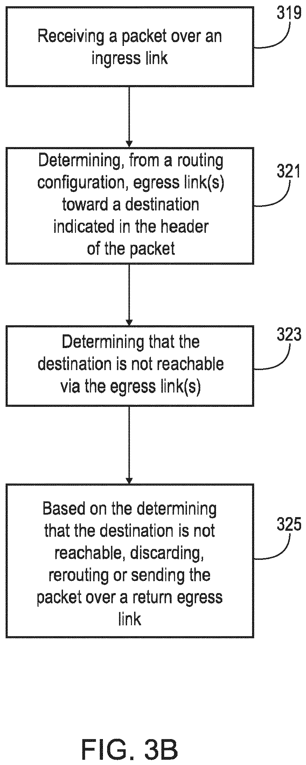

Fig. 3b illustrates an example flow diagram of a method for rerouting and/or backtracking packets, according to another example embodiment. In an example embodiment, the flow diagram of Fig. 3b may be performed by a network entity or network node associated with a communication system, such as LTE or 5G NR. For instance, in some example embodiments, the network node performing the method of Fig. 3b may include a base station, eNB, gNB, NG-RAN node, and/or IAB node (CU and/or DU part). In one example embodiment, the method of Fig. 3b may be performed by an IAB node, such as those illustrated in Fig. 1.

As illustrated in the example of Fig. 3b, the method may include, at 319, receiving a packet over an ingress link. In an embodiment, the method may also include, at 321, determining, from a routing configuration of the network node, one or more egress links toward a destination indicated in the header of the packet. According to certain embodiments, the method may include, at 323, determining that the destination is not reachable via the egress link(s). In other words, the determining 323 may include determining that the destination is reachable via none of the egress link(s), where for at least one of the egress link(s), the destination being unreachable includes the link being operational. The method may then include, at 325, based on the determining of the destination being unreachable, discarding, rerouting or sending the packet over a return egress link.

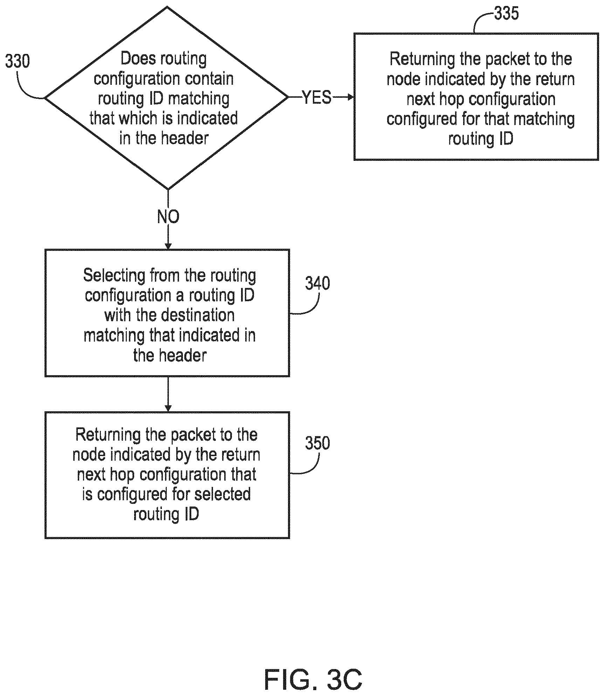

Fig. 3c illustrates another example flow diagram of a method, according to an embodiment. The method of Fig. 3c may include a procedure for determining to which node an undeliverable packet should be returned. In some embodiments, the method of Fig. 3c may be performed in conjunction with Fig. 3b, for example at 325, to determine to which node the packet should be rerouted or sent. As such, in some embodiments, the flow diagrams of Figs. 3b and 3c may be performed sequentially or in parallel.

As further illustrated in the example of Fig. 3c, when the IAB node determines that a packet is undeliverable (e.g., the destination indicated in the packet header is not reachable via any egress link), the method may include, at 330, checking whether its routing configuration contains a routing ID (destination + path) matching that which is indicated in the header of the packet. When it is determined that the routing configuration does contain a match with what is indicated in the packet's header, the method may include, at 335, returning the packet to the node indicated by the return next hop configuration that is configured for that matching routing ID. This may ensure that packets undeliverable on their designated path are returned along that path and so preceding nodes on that path learn about it and can better handle possible subsequent packets. However, when it is determined that the routing configuration does not contain a match with what is indicated in the packet header, then the method may include, at 340, selecting from the routing configuration of the IAB node a routing ID with the destination matching that indicated in the packet header and, at 350, returning the packet to the node indicated by the return next hop configuration that is configured for that selected routing ID.

As discussed above, in certain embodiments, the IAB node may be configured with a return next hop configuration per BAP routing ID (destination + path). According to an embodiment, the return next hop configuration may be used by the IAB node for determining the link over which to return an undeliverable packet.

It is noted that, in certain embodiments, the example method flow diagrams of Figs. 3a-3c may be combined in any suitable manner. For example, in some embodiments, the methods depicted in Figs. 3a-3c may be performed serially, sequentially or in parallel, for instance.

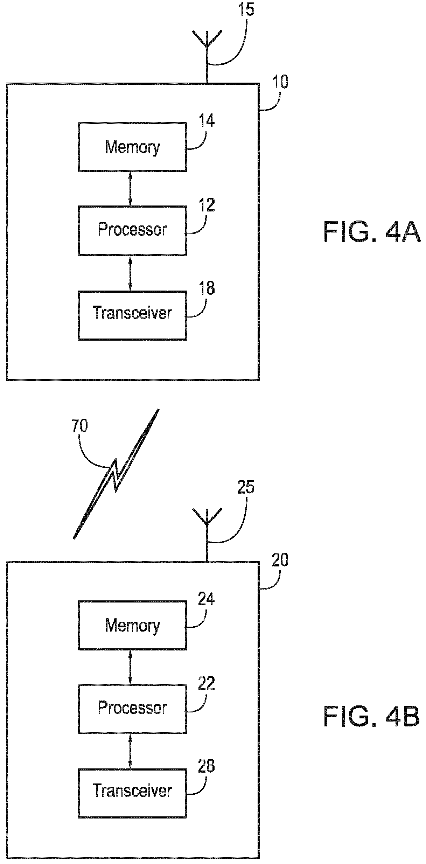

Fig. 4a illustrates an example of an apparatus 10 according to an embodiment. In an embodiment, apparatus 10 may be a node, host, or server in a communications network or serving such a network. For example, apparatus 10 may be a satellite, base station, a Node B, an evolved Node B (eNB), 5G Node B or access point, next generation Node B (NG-NB or gNB), IAB node, and/or WLAN access point, associated with a radio access network, such as a LTE network, 5G or NR. In example embodiments, apparatus 10 may be or may include a NG-RAN node, an eNB in LTE, gNB in 5G, or the like. For instance, in one embodiment, apparatus 10 may correspond to an IAB node illustrated in Fig. 1.

It should be understood that, in some example embodiments, apparatus 10 may be comprised of an edge cloud server as a distributed computing system where the server and the radio node may be stand-alone apparatuses communicating with each other via a radio path or via a wired connection, or where they may be located in a same entity communicating via a wired connection. For instance, in certain example embodiments where apparatus 10 represents a gNB, it may be configured in a central unit (CU) and distributed unit (DU) architecture that divides the gNB functionality. In such an architecture, the CU may be a logical node that includes gNB functions such as transfer of user data, mobility control, radio access network sharing, positioning, and/or session management, etc. The CU may control the operation of DU(s) over a front-haul interface. The DU may be a logical node that includes a subset of the gNB functions, depending on the functional split option. As another example, apparatus 10 may represent an IAB node, which may include a DU part and mobile termination (MT) part. It should be noted that one of ordinary skill in the art would understand that apparatus 10 may include components or features not shown in Fig. 4a.

As illustrated in the example of Fig. 4a, apparatus 10 may include a processor 12 for processing information and executing instructions or operations. Processor 12 may be any type of general or specific purpose processor. In fact, processor 12 may include one or more of general-purpose computers, special purpose computers, microprocessors, digital signal processors (DSPs), field-programmable gate arrays (FPGAs), application-specific integrated circuits (ASICs), and processors based on a multi-core processor architecture, as examples. While a single processor 12 is shown in Fig. 4a, multiple processors may be utilized according to other example embodiments. For example, it should be understood that, in certain embodiments, apparatus 10 may include two or more processors that may form a multiprocessor system (e.g., in this case processor 12 may represent a multiprocessor) that may support multiprocessing. In some embodiments, the multiprocessor system may be tightly coupled or loosely coupled (e.g., to form a computer cluster).

Processor 12 may perform functions associated with the operation of apparatus 10, which may include, for example, precoding of antenna gain/phase parameters, encoding and decoding of individual bits forming a communication message, formatting of information, and overall control of the apparatus 10, including processes related to management of communication resources.

Apparatus 10 may further include or be coupled to a memory 14 (internal or external), which may be coupled to processor 12, for storing information and instructions that may be executed by processor 12. Memory 14 may be one or more memories and of any type suitable to the local application environment, and may be implemented using any suitable volatile or nonvolatile data storage technology such as a semiconductor-based memory device, a magnetic memory device and system, an optical memory device and system, fixed memory, and/or removable memory. For example, memory 14 can be comprised of any combination of random access memory (RAM), read only memory (ROM), static storage such as a magnetic or optical disk, hard disk drive (HDD), or any other type of non-transitory machine or computer readable media. The instructions stored in memory 14 may include program instructions or computer program code that, when executed by processor 12, enable the apparatus 10 to perform tasks as described herein.

In an embodiment, apparatus 10 may further include or be coupled to (internal or external) a drive or port that is configured to accept and read an external computer readable storage medium, such as an optical disc, USB drive, flash drive, or any other storage medium. For example, the external computer readable storage medium may store a computer program or software for execution by processor 12 and/or apparatus 10.

In some embodiments, apparatus 10 may also include or be coupled to one or more antennas 15 for transmitting and receiving signals and/or data to and from apparatus 10. Apparatus 10 may further include or be coupled to a transceiver 18 configured to transmit and receive information. The transceiver 18 may include, for example, a plurality of radio interfaces that may be coupled to the antenna(s) 15. In certain embodiments, the radio interfaces may correspond to a plurality of radio access technologies including one or more of GSM, NB-IoT, LTE, 5G, WLAN, Bluetooth, BT-LE, NFC, radio frequency identifier (RFID), ultrawideband (UWB), MulteFire, and/or the like. According to an example embodiment, the radio interface may include components, such as filters, converters (for example, digital-to-analog converters and the like), mappers, a Fast Fourier Transform (FFT) module, and/or the like, e.g., to generate symbols for transmission via one or more downlinks and to receive symbols (for example, via an uplink).

As such, transceiver 18 may be configured to modulate information on to a carrier waveform for transmission by the antenna(s) 15 and demodulate information received via the antenna(s) 15 for further processing by other elements of apparatus 10. In other example embodiments, transceiver 18 may be capable of transmitting and receiving signals or data directly. Additionally or alternatively, in some embodiments, apparatus 10 may include an input and/or output device (I/O device).

In an embodiment, memory 14 may store software modules that provide functionality when executed by processor 12. The modules may include, for example, an operating system that provides operating system functionality for apparatus 10. The memory may also store one or more functional modules, such as an application or program, to provide additional functionality for apparatus 10. The components of apparatus 10 may be implemented in hardware, or as any suitable combination of hardware and software.

According to some embodiments, processor 12 and memory 14 may be included in or may form a part of processing circuitry or control circuitry. In addition, in some embodiments, transceiver 18 may be included in or may form a part of transceiver circuitry.

As used herein, the term "circuitry" may refer to hardware-only circuitry implementations (e.g., analog and/or digital circuitry), combinations of hardware circuits and software, combinations of analog and/or digital hardware circuits with software/firmware, any portions of hardware processor(s) with software (including digital signal processors) that work together to case an apparatus (e.g., apparatus 10) to perform various functions, and/or hardware circuit(s) and/or processor(s), or portions thereof, that use software for operation but where the software may not be present when it is not needed for operation. As a further example, as used herein, the term "circuitry" may also cover an implementation of merely a hardware circuit or processor (or multiple processors), or portion of a hardware circuit or processor, and its accompanying software and/or firmware. The term circuitry may also cover, for example, a baseband integrated circuit in a server, cellular network node or device, or other computing or network device.

As introduced above, in certain embodiments, apparatus 10 may be a network node or RAN node, such as a base station, access point, Node B, eNB, gNB, IAB node, WLAN access point, or the like. For example, in some embodiments, apparatus 10 may be configured to perform one or more of the processes depicted in any of the flow charts or signaling diagrams described herein, such as those illustrated in Fig. 3. In some embodiments, as discussed herein, apparatus 10 may be configured to perform a procedure relating to packet rerouting and/or backtracking by IAB node(s) and/or IAB donor DU(s).

According to this embodiment, apparatus 10 may be controlled by memory 14 and processor 12 to receive one or more packet(s) over an ingress link. In an embodiment, apparatus 10 may be controlled by memory 14 and processor 12 to determine, from a routing configuration of the apparatus 10, one or more egress link(s) toward a destination indicated in the header of the packet. According to one embodiment, apparatus 10 may be controlled by memory 14 and processor 12 to determine that the destination is not reachable via the egress link(s). In other words, apparatus 10 may be controlled to determine that the destination is reachable via none of the egress link(s), where for at least one of the egress link(s), the destination being unreachable includes the link being operational. In an embodiment, based on the determination of the destination being unreachable, apparatus 10 may be controlled by memory 14 and processor 12 to reroute, discard or send the packet over a return egress link.

In an embodiment, apparatus 10 may be configured with a configuration as to whether to return an undeliverable packet to a previous node on a path toward the destination. According to one embodiment, apparatus 10 may be configured by a donor network node (e.g., donor gNB) as to whether to return the undeliverable packet to the previous node based at least on whether alternative routes are available for the undeliverable packet. In another embodiment, the configuration may be configured to the apparatus 10 with a granularity of at least one of packet destination or backhaul (BH) radio link control (RLC) channel or quality of service (QoS) attributes of backhaul (BH) radio link control (RLC) channels.

According to certain embodiments, the apparatus 10 may be configured with a return next hop configuration per BAP routing ID. In an embodiment, apparatus 10 may be controlled by memory 14 and processor 12 to use the return next hop configuration to determine a link over which to return an undeliverable packet.

According to an embodiment, when a packet is received that is (explicitly or implicitly) indicated as undeliverable, apparatus 10 may be controlled by memory 14 and processor 12 to consider or determine the destination indicated in the header of the packet unreachable via the link over which the packet was received. In one embodiment, when a packet is received that is explicitly indicated in the packet as undeliverable, apparatus 10 may be controlled by memory 14 and processor 12 to remove the indication that the packet is undeliverable from the packet.

In an embodiment, when a packet is received that is indicated as undeliverable, apparatus 10 may be controlled by memory 14 and processor 12 to re-route the packet over another link via which a destination of the packet is reachable. According to an embodiment, when such another link is not available, apparatus 10 may be controlled by memory 14 and processor 12 to determine the packet undeliverable, and/or to discard the packet or return the packet.

According to an embodiment, when the apparatus 10 determines a destination unreachable via a given link, apparatus 10 may be controlled by memory 14 and processor 12 to start a timer associated with a pair comprising the link and destination and, when the timer associated with the pair expires, to determine the destination reachable via the link again. In one embodiment, apparatus 10 may be controlled by memory 14 and processor 12 to re-start the timer associated with the pair when further packets are received, over the link, that are undeliverable to the destination.

In a further embodiment, apparatus 10 may be controlled by memory 14 and processor 12 to, when an indication is received, determine that a given destination is reachable via a given link, and to stop the timer associated with the pair if the timer is running. According to one embodiment, the indication may include: when the apparatus 10 receives, over the link, BAP-protocol flow-control feedback inviting further data destined to that destination; or when the apparatus 10 receives a backhaul routing configuration message configuring the link as a next hop toward the destination.

In a further embodiment, when the apparatus 10 determines that a packet is undeliverable (e.g., the destination indicated in the packet header is not reachable via any egress link), apparatus 10 may be controlled by memory 14 and processor 12 to check whether its routing configuration contains a routing ID (destination + path) matching that which is indicated in the header of the packet. When it is determined that the routing configuration does contain a match with what is indicated in the packet's header, apparatus 10 may be controlled by memory 14 and processor 12 to return the packet to the node indicated by the return next hop configuration that is configured for that matching routing ID.

In an embodiment, when it is determined that the routing configuration does not contain a match with what is indicated in the packet header, then apparatus 10 may be controlled by memory 14 and processor 12 to select from the routing configuration of the apparatus 10 a routing ID with the destination matching that indicated in the packet header and, to return the packet to the node indicated by the return next hop configuration that is configured for that selected routing ID.

Fig. 4b illustrates an example of an apparatus 20 according to another embodiment. In an embodiment, apparatus 20 may be a node or element in a communications network or associated with such a network, such as a UE, mobile equipment (ME), mobile station, mobile device, stationary device, IoT device, or other device. As described herein, UE may alternatively be referred to as, for example, a mobile station, mobile equipment, mobile unit, mobile device, user device, subscriber station, wireless terminal, tablet, smart phone, IoT device, sensor or NB-IoT device, or the like. As one example, apparatus 20 may be implemented in, for instance, a wireless handheld device, a wireless plug-in accessory, or the like.

In some example embodiments, apparatus 20 may include one or more processors, one or more computer-readable storage medium (for example, memory, storage, or the like), one or more radio access components (for example, a modem, a transceiver, or the like), and/or a user interface. In some embodiments, apparatus 20 may be configured to operate using one or more radio access technologies, such as GSM, LTE, LTE-A, NR, 5G, WLAN, WiFi, NB-IoT, Bluetooth, NFC, MulteFire, and/or any other radio access technologies. It should be noted that one of ordinary skill in the art would understand that apparatus 20 may include components or features not shown in Fig. 4b.

As illustrated in the example of Fig. 4b, apparatus 20 may include or be coupled to a processor 22 for processing information and executing instructions or operations. Processor 22 may be any type of general or specific purpose processor. In fact, processor 22 may include one or more of general-purpose computers, special purpose computers, microprocessors, digital signal processors (DSPs), field-programmable gate arrays (FPGAs), application-specific integrated circuits (ASICs), and processors based on a multi-core processor architecture, as examples. While a single processor 22 is shown in Fig. 4b, multiple processors may be utilized according to other embodiments. For example, it should be understood that, in certain embodiments, apparatus 20 may include two or more processors that may form a multiprocessor system (e.g., in this case processor 22 may represent a multiprocessor) that may support multiprocessing. In certain embodiments, the multiprocessor system may be tightly coupled or loosely coupled (e.g., to form a computer cluster).

Processor 22 may perform functions associated with the operation of apparatus 20 including, as some examples, precoding of antenna gain/phase parameters, encoding and decoding of individual bits forming a communication message, formatting of information, and overall control of the apparatus 20, including processes related to management of communication resources.

Apparatus 20 may further include or be coupled to a memory 24 (internal or external), which may be coupled to processor 22, for storing information and instructions that may be executed by processor 22. Memory 24 may be one or more memories and of any type suitable to the local application environment, and may be implemented using any suitable volatile or nonvolatile data storage technology such as a semiconductor-based memory device, a magnetic memory device and system, an optical memory device and system, fixed memory, and/or removable memory. For example, memory 24 can be comprised of any combination of random access memory (RAM), read only memory (ROM), static storage such as a magnetic or optical disk, hard disk drive (HDD), or any other type of non-transitory machine or computer readable media. The instructions stored in memory 24 may include program instructions or computer program code that, when executed by processor 22, enable the apparatus 20 to perform tasks as described herein.

In an embodiment, apparatus 20 may further include or be coupled to (internal or external) a drive or port that is configured to accept and read an external computer readable storage medium, such as an optical disc, USB drive, flash drive, or any other storage medium. For example, the external computer readable storage medium may store a computer program or software for execution by processor 22 and/or apparatus 20.

In some embodiments, apparatus 20 may also include or be coupled to one or more antennas 25 for receiving a downlink signal and for transmitting via an uplink from apparatus 20. Apparatus 20 may further include a transceiver 28 configured to transmit and receive information. The transceiver 28 may also include a radio interface (e.g., a modem) coupled to the antenna 25. The radio interface may correspond to a plurality of radio access technologies including one or more of GSM, LTE, LTE-A, 5G, NR, WLAN, NB-IoT, Bluetooth, BT-LE, NFC, RFID, UWB, and the like. The radio interface may include other components, such as filters, converters (for example, digital-to-analog converters and the like), symbol demappers, signal shaping components, an Inverse Fast Fourier Transform (IFFT) module, and the like, to process symbols, such as OFDMA symbols, carried by a downlink or an uplink.

For instance, transceiver 28 may be configured to modulate information on to a carrier waveform for transmission by the antenna(s) 25 and demodulate information received via the antenna(s) 25 for further processing by other elements of apparatus 20. In other embodiments, transceiver 28 may be capable of transmitting and receiving signals or data directly. Additionally or alternatively, in some embodiments, apparatus 20 may include an input and/or output device (I/O device). In certain embodiments, apparatus 20 may further include a user interface, such as a graphical user interface or touchscreen.

In an embodiment, memory 24 stores software modules that provide functionality when executed by processor 22. The modules may include, for example, an operating system that provides operating system functionality for apparatus 20. The memory may also store one or more functional modules, such as an application or program, to provide additional functionality for apparatus 20. The components of apparatus 20 may be implemented in hardware, or as any suitable combination of hardware and software. According to an example embodiment, apparatus 20 may optionally be configured to communicate with apparatus 10 via a wireless or wired communications link 70 according to any radio access technology, such as NR.

According to some embodiments, processor 22 and memory 24 may be included in or may form a part of processing circuitry or control circuitry. In addition, in some embodiments, transceiver 28 may be included in or may form a part of transceiving circuitry.

As discussed above, according to some embodiments, apparatus 20 may be a UE, mobile device, mobile station, ME, IoT device and/or NB-IoT device, for example. According to certain embodiments, apparatus 20 may be controlled by memory 24 and processor 22 to perform the functions associated with example embodiments described herein. For example, in some embodiments, apparatus 20 may be configured to perform one or more of the processes depicted in any of the flow charts or signaling diagrams described herein, such as those illustrated in Fig. 3a and Fig.3b. In certain embodiments, apparatus 20 may be configured to perform a procedure relating to packet rerouting and/or backtracking, for instance.

Therefore, certain example embodiments provide several technical improvements, enhancements, and/or advantages. For example, certain embodiments improve routing in IAB. Some embodiments enable the successful introduction of packet backtracking and/or rerouting by IAB nodes. Accordingly, the use of certain example embodiments results in improved functioning of communications networks and their nodes.

In some example embodiments, the functionality of any of the methods, processes, signaling diagrams, algorithms or flow charts described herein may be implemented by software and/or computer program code or portions of code stored in memory or other computer readable or tangible media, and executed by a processor.

In some example embodiments, an apparatus may be included or be associated with at least one software application, module, unit or entity configured as arithmetic operation(s), or as a program or portions of it (including an added or updated software routine), executed by at least one operation processor. Programs, also called program products or computer programs, including software routines, applets and macros, may be stored in any apparatus-readable data storage medium and may include program instructions to perform particular tasks.

A computer program product may include one or more computer-executable components which, when the program is run, are configured to carry out some example embodiments. The one or more computer-executable components may be at least one software code or portions of code. Modifications and configurations required for implementing functionality of an example embodiment may be performed as routine(s), which may be implemented as added or updated software routine(s). In one example, software routine(s) may be downloaded into the apparatus.

As an example, software or a computer program code or portions of code may be in a source code form, object code form, or in some intermediate form, and it may be stored in some sort of carrier, distribution medium, or computer readable medium, which may be any entity or device capable of carrying the program. Such carriers may include a record medium, computer memory, read-only memory, photoelectrical and/or electrical carrier signal, telecommunications signal, and/or software distribution package, for example. Depending on the processing power needed, the computer program may be executed in a single electronic digital computer or it may be distributed amongst a number of computers. The computer readable medium or computer readable storage medium may be a non-transitory medium.

In some examples, the functionality provided by some embodiments may be implemented by processing means, controlling means, determining means, storage means, and/or the like, included in an apparatus (e.g., apparatus 10 or apparatus 20).

In other example embodiments, the functionality may be performed by hardware or circuitry included in an apparatus (e.g., apparatus 10 or apparatus 20), for example through the use of an application specific integrated circuit (ASIC), a programmable gate array (PGA), a field programmable gate array (FPGA), or any other combination of hardware and software. In yet another example embodiment, the functionality may be implemented as a signal, such as a non-tangible means that can be carried by an electromagnetic signal downloaded from the Internet or other network.

According to an example embodiment, an apparatus, such as a node, device, or a corresponding component, may be configured as circuitry, a computer or a microprocessor, such as single-chip computer element, or as a chipset, which may include at least a memory for providing storage capacity used for arithmetic operation(s) and/or an operation processor for executing the arithmetic operation(s).

One having ordinary skill in the art will readily understand that the example embodiments as discussed above may be practiced with procedures in a different order, and/or with hardware elements in configurations which are different than those which are disclosed. Therefore, although some embodiments have been described based upon these example embodiments, it would be apparent to those of skill in the art that certain modifications, variations, and alternative constructions would be apparent, while remaining within the spirit and scope of example embodiments.

A first embodiment is directed to a method, which may include receiving, at a network node, a packet over an ingress link. The method may then include determining whether the packet is being returned as undeliverable, and, when it is determined that the packet is being returned as undeliverable, re-routing, discarding or sending the packet over a return egress link.

According to a variant, when it is determined that the packet is being returned as undeliverable, the method comprises determining a destination indicated in a header of the packet unreachable via the link over which the packet was received.

In a variant, when a packet is received that is explicitly indicated as undeliverable, the method comprises removing the indication that the packet is undeliverable from the packet.

According to a variant, when it is determined that the packet is being returned as undeliverable, the re-routing comprises determining an egress link via which a destination indicated in a header of the packet is reachable, and sending the packet over the egress link.

In a variant, when no egress link is available via which the destination is reachable, the discarding or sending over a return egress link comprises: determining the packet undeliverable, and discarding the packet or returning the packet as undeliverable.

According to a variant, the determining whether the packet is being returned as undeliverable comprises determining that the packet is being returned as undeliverable when the ingress link over which the packet is received matches with a next hop, in a routing configuration of the node, toward a destination indicated in a header of the packet.

A second embodiment is directed to a method, which may include receiving, at a network node, a packet over an ingress link. The method may also include determining, from a routing configuration of the network node, at least one egress link toward a destination indicated in the header of the packet, and determining that said destination is reachable via none of the at least one egress link, where, for at least one egress link, the destination being unreachable comprises the link being operational. The method may then include, based on said determining of unreachability, discarding, rerouting or sending the packet over a return egress link.

In a variant, the network node is configured with a configuration as to whether to return an undeliverable packet to a previous node on a path toward the destination.

According to a variant, the network node is configured by a donor network node as to whether to return the undeliverable packet to the previous node based at least on whether alternative routes are available for the undeliverable packet.

In a variant, the configuration is configured to the network node with a granularity of at least one of packet destination or backhaul (BH) radio link control (RLC) channel or quality of service (QoS) attributes of backhaul (BH) radio link control (RLC) channels.

According to a variant, the network node is configured with a return next hop configuration.

In a variant, the return next hop configuration is configured per Backhaul Adaptation Protocol (BAP) routing identifier (ID).

According to a variant, the return next hop configuration is used by the network node for determining a link over which to return an undeliverable packet.

In a variant, when the network node determines a packet undeliverable, the method comprises checking whether the routing configuration of the network node contains a routing identifier (ID) matching a routing identifier (ID) indicated in the header of the packet.

According to a variant, when it is determined that the routing configuration does contain a match with the routing identifier (ID) indicated in the header of the packet, the method comprises returning the packet to the node indicated by the return next hop configuration that is configured for that matching routing ID.

In a variant, when it is determined that no configured routing identifier (ID) matches the routing identifier (ID) indicated in the header of the packet, the method comprises: selecting from the routing configuration of the network node a routing identifier (ID) with the destination matching that indicated in the packet header; and returning the packet to the node indicated by the return next hop configuration that is configured for the selected routing identifier (ID).

According to a variant, when the network node determines a given destination unreachable via a link the method comprises: starting a timer associated with a pair comprising the link and the destination; and when the timer associated with the pair expires, determining the destination reachable via the link.

In a variant, the method may include re-starting the timer associated with the pair upon reception, over the link, of further packets undeliverable to the destination.

In a variant, the method may include determining the destination reachable via the link and stopping the timer associated with the pair if the timer is running.

According to a variant, the method may include, when an indication is received, determining a given destination reachable via a given link.

In a variant, the indication may include at least one of: when the network node receives, over the link, BAP-protocol flow-control feedback inviting further data destined to that destination; or when the network node receives a backhaul routing configuration message configuring the link as a next hop toward the destination.

According to a variant, the network node may include at least one of an integrated access and backhaul (IAB) node or an integrated access and backhaul (IAB) donor distributed unit (DU).

A third embodiment is directed to a method that may include configuring, by a donor network node, an integrated access and backhaul (IAB) node with at least: a configuration as to whether to return an undeliverable packet to a previous node on a path toward the destination.

In a variant, the configuration as to whether to return the undeliverable packet to the previous node on the path toward the destination is based at least on whether alternative routes are available for the undeliverable packet.

According to a variant, the configuration is configured to the integrated access and backhaul (IAB) node with a granularity of at least one of packet destination or backhaul (BH) radio link control (RLC) channel or quality of service (QoS) attributes of backhaul (BH) radio link control (RLC) channels.

In a variant, the method may also include configuring the integrated access and backhaul (IAB) node with a return next hop configuration.

According to a variant, the return next hop configuration is configured per Backhaul Adaptation Protocol (BAP) routing identifier (ID).

A fourth embodiment is directed to an apparatus including at least one processor and at least one memory comprising computer program code. The at least one memory and computer program code may be configured, with the at least one processor, to cause the apparatus at least to perform the method according to the first embodiment, the second embodiment, the third embodiment, and/or any other embodiments discussed herein, or any of the variants described above.

A fifth embodiment is directed to an apparatus that may include circuitry configured to perform the method according to the first embodiment, the second embodiment, the third embodiment, and/or any other embodiments discussed herein, or any of the variants described above.

A sixth embodiment is directed to an apparatus that may include means for performing the method according to the first embodiment, the second embodiment, the third embodiment, and/or any other embodiments discussed herein, or any of the variants described above.

For example, an apparatus may include receiving means for receiving a packet over an ingress link, determining means for determining whether the packet is being returned as undeliverable, and, when it is determined that the packet is being returned as undeliverable, means for re-routing, discarding or sending the packet over a return egress link.

As another example, an apparatus may include receiving means for receiving a packet over an ingress link, determining means for determining, from a routing configuration of the apparatus, at least one egress link toward a destination indicated in the header of the packet, and determining means for determining that said destination is reachable via none of the at least one egress link, where, for at least one egress link, the destination being unreachable comprises the link being operational. The apparatus may also include, based on said determining of unreachability, means for discarding, rerouting or sending the packet over a return egress link.

As another example, an apparatus may include configuring means for configuring an integrated access and backhaul (IAB) node with at least: a configuration as to whether to return an undeliverable packet to a previous node on a path toward the destination.

A seventh embodiment is directed to a non-transitory computer readable medium comprising program instructions stored thereon for performing at least the method according to the first embodiment, the second embodiment, the third embodiment, and/or any other embodiments discussed herein, or any of the variants described above.

## Claims

1. An apparatus, comprising:
means for receiving a packet over an ingress link;
means for determining whether the packet is being returned as undeliverable; and
means for discarding the packet, re-routing the packet or sending the packet over a return egress link when it is determined that the packet is being returned as undeliverable.

2. The apparatus according to claim 1, further comprising:
means for determining a destination indicated in a header of the packet unreachable via the link over which the packet was received when it is determined that the packet is being returned as undeliverable.

3. The apparatus according to claims 1 or 2, further comprising:
means for removing the indication that the packet is undeliverable from the packet when the packet received is explicitly indicated as undeliverable.

4. The apparatus according to any one of claims 1-3, further comprising:
means for determining an egress link via which a destination indicated in a header of the packet is reachable; and
means for sending the packet over the egress link.

5. The apparatus according to any one of claims 1-3, further comprising:
means for determining the packet undeliverable when no egress link is available via which a destination is reachable; and
means for discarding the packet or return the packet as undeliverable.

6. The apparatus according to any one of claims 1-5, wherein the packet is determined being returned as undeliverable when the ingress link over which the packet is received matches with a next hop, in a routing configuration of the apparatus, toward a destination indicated in a header of the packet.

7. An apparatus, comprising:
means for receiving a packet over an ingress link;
means for determining, from a routing configuration of the apparatus, at least one egress link toward a destination indicated in a header of the packet;
means for determining that said destination is reachable via none of the at least one egress link, wherein for at least one egress link the destination being unreachable comprises the link being operational; and
means for discarding the packet, rerouting the packet or sending the packet over a return egress link based on said determining of unreachability.

8. The apparatus according to claim 7, wherein the apparatus is configured with a configuration as to whether to return an undeliverable packet to a previous node on a path toward the destination.

9. The apparatus according to claim 8, wherein the apparatus is configured by a donor network node as to whether to return the undeliverable packet to the previous node based at least on whether alternative routes are available for the undeliverable packet.

10. The apparatus according to any one of claims 7-9, wherein the routing configuration is configured to the apparatus with a granularity of at least one of packet destination or backhaul radio link control channel or quality of service attributes of backhaul radio link control channels.

11. The apparatus according to any one of claims 7-10, wherein the apparatus is configured with a return next hop configuration.

12. The apparatus according to any one of claims 7-11, further comprising:
means for checking whether the routing configuration of the apparatus contains a routing identifier matching a routing identifier indicated in the header of the packet when it is determined that the destination is unreachable.

13. An apparatus, comprising:
means for configuring an integrated access and backhaul node with at least a configuration as to whether to return an undeliverable packet to a previous node on a path toward a destination.

14. The apparatus according to claim 13, wherein the configuration as to whether to return the undeliverable packet to the previous node on the path toward the destination is based at least on whether alternative routes are available for the undeliverable packet.

15. The apparatus according to claim 13 or 14, wherein the configuration is configured to the integrated access and backhaul node with a granularity of at least one of packet destination or backhaul radio link control channel or quality of service attributes of backhaul radio link control channels.
